# EUROPEAN PATENT SPECIFICATION

(11) **EP 3 748 439 B1**
(45) Date of publication and mention of the grant of the patent: **09.11.2022**
(21) Application number: 19916547.3
(22) Date of filing: 10.09.2019
(51) Int. Cl.: G05B 9/03, G06F 11/20, G06F 11/14, B61L 15/00

(54) **SYNCHRONIZATION AND HOT STANDBY METHOD AND SYSTEM FOR PRIMARY SYSTEM AND STANDBY SYSTEM OF APPARATUS**
SYNCHRONISATIONS- UND HOT-STANDBY-VERFAHREN UND -SYSTEM FÜR PRIMÄRES SYSTEM UND STANDBY-SYSTEM EINER VORRICHTUNG
PROCÉDÉ ET SYSTÈME DE SYNCHRONISATION ET DE SECOURS IMMÉDIAT POUR SYSTÈME PRIMAIRE ET SYSTÈME DE VEILLE D'APPAREIL

(30) Priority: 27.03.2019 CN 201910236866
(43) Date of publication of application: 09.12.2020
(73) Proprietor: CRSC Research & Design Institute Group Co., Ltd., Beijing 100070 (CN)
(72) Inventor: ZHANG, Youbing, Fengtai District 100070 (CN); CHEN, Zhiqiang, Fengtai District 100070 (CN); WANG, Jianmin, Fengtai District 100070 (CN); ZHANG, Guozhen, Fengtai District 100070 (CN); YU, Xiaona, Fengtai District 100070 (CN)
(74) Representative: Huang, Liwei
(86) International application number: PCT/CN2019/105214
(87) International publication number: WO 2020/192029

(56) References cited:
- CN-A- 101 030 073
- CN-A- 103 048 920
- CN-A- 103 941 633
- CN-A- 105 824 273
- CN-A- 106 527 116
- CN-A- 108 153 144
- CN-A- 108 153 144
- CN-A- 108 459 496
- CN-A- 109 188 895
- CN-A- 109 946 956
- CN-U- 202 372 803
- CN-U- 204 856 062
- CN-U- 205 158 001
- US-A1- 2010 049 717
- US-A1- 2013 318 041
- US-A1- 2013 339 788
- US-B1- 6 618 628

## Description

The present application claims priority to Chinese patent application with the application No. of 2019102368665 and the invention title of "method and system for synchronization and hot backup of active-standby system of a device" filed on March 27, 2019 in China.

### TECHNICAL FIELD

The present application relates to the field of automation technology, and more particularly, to a method and a system for synchronization and hot backup of active-standby system of a device.

### BACKGROUND

The high-speed railway on-board device is a key device to ensure train running safety, it receives control information such as line conditions, train movement authority from a ground device, and generates a target distance continuous speed control mode curve based on train traction and braking characteristics, ensuring that the train does not exceed an allowable speed curve, trying to ensure safe train running at the maximum running speed, reducing train running time, and avoiding train delays.

If the on-board device does not use the hot backup technology, the train will brake to stop according to the fault-safety principle once the on-board device has a failure. After the train stopped, if recovery can be made with respect to the failure by restarting the on-board device, the train can continue to run under supervision of the on-board device, only that stopping lowers the running efficiency and the train will delay. After the train stopped, if recovery cannot be made with respect to the failure by restarting the on-board device, it will seriously affect the running efficiency and cause the train to delay seriously. Therefore, the on-board device is designed as a dual-system hot backup, if one system has a failure, the other system can continue to control the train, which improves system availability and safety, maximizes connection effect between the two systems, and ensures continuity of system running, thereby improves running efficiency of the entire system.

It takes a lot of time to eliminate a failure if the on-board device in the prior art has a failure, which will cause the train to delay and affect the efficiency of train running.

US 2013/318041A1 disclosed a method for operating an automation system having at least two subsystems. The Figure 3 thereof illustrates a redundant automation system which comprises two subsystems. In paragraph [0024], "from a time at which an updating phase is complete, the automation system operates in a redundant operating mode". In paragraph [0026], "it is assumed that one subsystem is operated as a master M and one subsystem is operated as a slave S....The master reading the process input information or process input values from the peripheral unit Pe, and making it available to the slave S in a temporally asynchronous manner."

US 2013/339788A1 provides a dual redundant process controller. The controller comprises a first processor, memory, and instance of a process control application stored in the first memory. In paragraph [0034] it says, a higher priority task that is ready for processing will not wait on a lower priority task to complete processing.

### SUMMARY

The invention is set out in the appended set of claims.

The hardware platform of the present disclosure ensures that the active system and the standby system are synchronously powered on, the software platform thereof ensures that operating states and external inputs of the active system and the standby system are synchronized, hot backup of the active system and the standby system is achieved, and the standby system does not output control commands while the active system outputs control commands, so the standby system can be upgraded to an active system if the active system has a failure in the case where the active system and the standby system are synchronized, seamless and safe switching can be realized.

Other features and advantages of the present disclosure will be set forth in the following description, some of them will become obvious from the description or will be understood by implementing the present disclosure. The objectives and other advantages of the present disclosure can be realized and obtained through the structures indicated in the specification, claims and drawings.

### BRIEF DESCRIPTION OF THE DRAWINGS

In order to more clearly illustrate the technical solutions in the embodiments of the present disclosure or in the prior art, the drawings necessary for description of the embodiments or the prior art will be briefly introduced below, obviously, the drawings in the following description are some embodiments of the present disclosure, other drawings can be obtained by those of ordinary skill in the art based on these drawings without paying creative efforts.
Figure 1 shows a system diagram of synchronization of slow tasks between the active system and the standby system;
Figure 2 shows a system diagram of synchronization of fast tasks between the active system and standby system.

### DETAILED DESCRIPTION OF THE EMBODIMENTS

In order to make the purpose, technical solutions and advantages of the embodiments of the present disclosure clearer, the technical solutions in the embodiments of the present disclosure will be described clearly and completely in conjunction with the accompanying drawings in the embodiments of the present disclosure, obviously, the described embodiments are only part of the embodiments of the present disclosure, not all the embodiments.

The present disclosure provides a method for synchronization and hot backup of active-standby system of a device, the method comprising steps of:
ensuring, by a hardware platform, that periods of the active system and the standby system are synchronized;
ensuring, by an application software, that operating states and external inputs of the active system and the standby system are synchronized;
ensuring, by the application software, that the active system outputs control commands, and the standby system does not output control commands;
upgrading the standby system to an active system if the active system has a failure in the case where the active system and the standby system are synchronized, so that seamless and safe switching can be achieved while a train does not need to stop or to perform other particular operations;
losing synchronization between the active system and the standby system when the standby system enters a failure state.

The application software of the active system and the standby system at least includes a fast task and a slow task, wherein the fast task is of a high priority, and the slow task is of a low priority.

The fast tasks of the active system and the standby system are used to quickly transmit operating states and external input information, and to determine external input information received by both the active system and the standby system.

The slow tasks of the active system and the standby system are used to execute application software logic, to use external input information received by both the active system and the standby system as determined by the fast tasks in each period, to realize synchronization of external inputs between the active system and the standby system.

Exemplarily, the active-standby system includes an active system and a standby system, the fast tasks and slow tasks included in the application software of the active system and the standby system are all executed periodically, and executing period of the fast tasks should be shorter than or equal to 1/10 of that of the slow tasks, which ensures a quick execution effect of the fast tasks. It is only used as an example for illustration that the executing period of the fast tasks should be shorter than or equal to 1/10 of that of the slow tasks, they are not limited to this proportional relationship. The fast tasks has faster executing speed than that of the slow tasks, which ensure timeliness of synchronization, and avoids generating extra redundant time during a fast task executing period, so as to ensure timeliness of information transferred by the fast tasks between the active system and the standby system. As for period synchronization between fast task and slow task of the active system and the standby system, operating states and external input information of the active system are shared between the fast task and the slow task of the active system, also, operating states and external input information of the standby system are shared between the fast task and the slow task of the standby system.

Exemplarily, in the high-speed railway on-board device, application software is used to ensure that operating states and external inputs of the active system and the standby system are synchronized, wherein the operating states include state information such as operating level and operating mode, the external input information includes wireless data, DMI (Direct Media Interface) data, data from external devices such as transponders, and track circuits. The specific content of the operating states and the external input information are only used as an example to illustrate operating states of the train, but not limited to only the train.

For example, the operating states and the external input information can also indicate that they are circuit operating data, which is used for line retrieval, the active system and the standby system are synchronized to assist in confirming a line operating state.

Exemplarily, if the active system and the standby system are synchronized, the fast tasks and the slow tasks between the active system and the standby system are performed periodically, the active system transmits state information to the standby system, the standby system uses the state information of the active system. The active system transmits received external input information to the standby system, the standby system compares received external input information with the external input information received by the active system, gives a determining result, and determines main synchronized external input information used in execution by the active system and the standby system. The standby system is the hot backup of the active system, if the active system has a failure, the standby system is upgraded to an active system, the standby system takes over operations of the active system; if the standby system has a failure, it does not affect normal operations of the active system.

In the case where the active system and the standby system are not synchronized, the standby system cannot be upgraded to an active system if the active system has a failure, neither of the two systems can control normal operations of system, which causes a system failure.

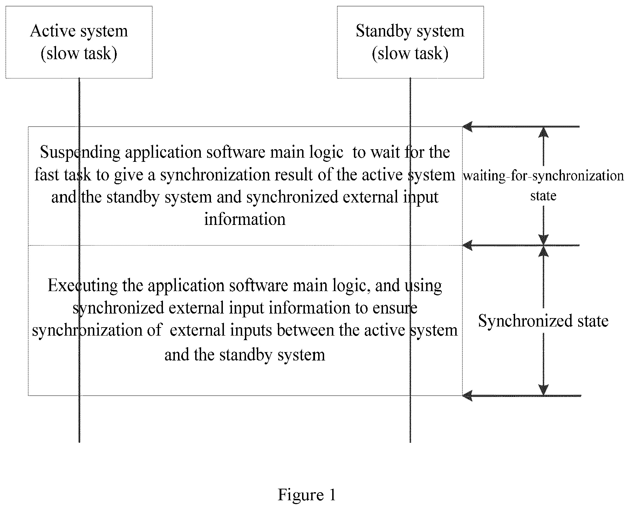

As shown in Figure 1, it is a slow task process: the slow task of the active system and the slow task of the standby system are divided into a waiting-for-synchronization phase and a synchronized phase:

The waiting-for-synchronization state: the active system and the standby system enter the waiting-for-synchronization phase each time the period of a slow task starts. In the waiting-for-synchronization phase, the active system and the standby system respectively suspend their respective application software logic, wait for the fast tasks to give a result of whether the active system and the standby system are synchronized and a result of synchronization of the external input information. The fast task of the active system transmits a request frame to the fast task of the standby system, the fast task of the standby system receives the request frame, uses the operating states of the active system, and compares the external input information of the active system and the standby system. The amount of external input information received by the active system and the standby system may be different, the minimum amount between the two is used as a comparison range, and comparison is performed sequentially from the start, the standby system enters a synchronized state if comparison is successful. The fast task of the standby system replies with a response frame to the fast task of the active system to inform the active system of the synchronized external input data, the fast task of the active system receives the response frame from the fast task of the standby system, and the active system also enters the synchronized state.

The synchronized phase: in the synchronized phase, the slow tasks of the active system and the standby system start to execute their respective application software logic, only the external input information received by both the active system and the standby system is used to realize synchronization of the external input information; in the synchronized phase, the fast task of the active system still transmits an idle frame periodically, the fast task of the standby system receives the idle frame, uses the operating states of the active system, and stores external input information of the active system for synchronization check of external input information in the waiting-for-synchronization state of the next period of slow task.

In addition, the standby system compares key information such as the period numbers of the active system and the standby system, the standby system considers the active system and the standby system to be out of synchronization if there is inconsistency between the active system and the standby system. When the active system and the standby system are synchronized, the active system outputs control commands, so that the entire device can operate through the control commands issued by the active system, and the standby system does not output control commands, so as to prevent the commands of the standby system from affecting the commands of the active system in the synchronized state, thus avoiding a device failure.

Exemplarily, the on-board device is used as an example to illustrate, it is not limited to the on-board device operating inside the train, but may also be used for other types of active-standby system synchronization effects, such as subways, computer processor operations, and other aspects, but not limited to only train running. When the train is running, the active system and the standby system are synchronized, the on-board device operates normally, data of the active system and data of the standby system are normally stored and interacted, and the train runs normally. In the state where the active system and the standby system are synchronized, if the active system has a failure, the standby system is upgraded to an active system to control the train running, this is because both the active system and the standby system receive data when the active system and the standby system are synchronized, that is, periods of the active system and the standby system are synchronized, and their inputs are synchronized, the active system outputs control commands, and the standby system does not output control commands. If the active system has a failure, the active system does not output control commands, the standby system is upgraded to an active system, and the standby system outputs control commands, so that the active system and the standby system can be seamlessly switched without stopping the train, which improves system availability and safety. If the standby system also has a failure in the case where the active system has a failure, the train needs to be braked and stopped. The on-board device will be restarted after stopping. If one of the active system and the standby system can be recovered from the failure, the train can go on running under supervision of the on-board device; if both the active system and the standby system cannot be recovered from the failure, the running efficiency will be seriously affected.

In the case where the active system and the standby system are not synchronized, the active system and the standby system are operating normally, the active system is used to control the train. If the active system has a failure, the standby system cannot be upgraded to an active system, resulting in a system failure. In the case where the active system and the standby system are not synchronized, the entire system is in a failure state after the active system has a failure, and the failure needs to be eliminated.

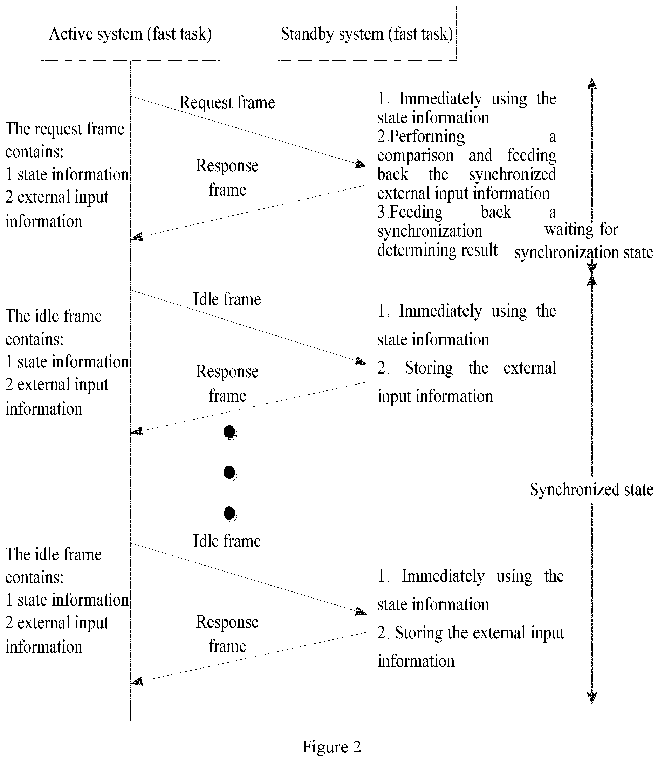

As shown in Figure 2, it is the fast task process: the fast task of the active system and the fast task of the standby system are divided into a waiting-for-synchronization phase and a synchronized phase:

Through the fast task, the active system can transmit two types of frame to the standby system, namely request frame and idle frame, both of which contain the operating state information of the active system and the external input information; the active system transmits the idle frame, the standby system uses the operating states of the active system, the standby system stores the external input information of the active system and replies with a response frame; the active system transmits a request frame, the standby system uses the operating state of the active system, the standby system compares the external input information between the active system and the standby system, determines the external input information received by both the active system and the standby system, and replies with a response frame.

The waiting-for-synchronization state: the fast task of the active system transmits a request frame to the fast task of the standby system, the fast task of the standby system receives the request frame, uses the operating state of the active system, and compares the external input information of the active system and the standby system. If the amount of external input information received by the active system and the standby system are different or the amount of external input information received by the active system and the standby system are the same, the minimum amount of the active system and the standby system is used as a comparison range, and comparison is made sequentially from the start. If the comparison is successful, the standby system enters the synchronized state; if comparison fails, the active system and the standby system are out of synchronization. The fast task of the standby system replies with a response frame to the fast task of the active system to inform the active system of the synchronized external input data, the fast task of the active system receives the response frame from the fast task of the standby system, and the active system also enters the synchronized state.

As shown in Figure 2, when the fast task of the active system transmits a request frame to the fast task of the standby system, the fast task of the standby system receives the request frame and uses the operating states of the active system, compares and feeds back the synchronized external input information. At this time, the fast task of the standby system replies with the response frame to the fast task of the active system, and feeds back the synchronization determining result at the same time. The fast task of the active system receives the response frame of the fast task of the standby system, indicating that the active system also enters the synchronized state, thereby the active system and the standby system change from the waiting-for-synchronization state to the synchronized state.

The synchronized state: in the synchronized phase, the fast task of the active system still transmits the idle frame periodically, the fast task of the standby system receives the idle frame, uses the operating states of the active system, and stores the external input information of the active system for synchronization check of external input information in the waiting-for-synchronization state of the next period of slow task.

As shown in Figure 2, the fast task of the active system continuously transmits the periodic idle frame to the fast task of the standby system, the idle frame contains state information and external input information, the fast task of the standby system receives the idle frame and immediately uses the state information, and stores the external input information. At this time, the fast task of the standby system also continuously transmits the periodic response frame to the fast task of the active system, thereby ensuring periodic synchronization between the fast task of the active system and the fast task of the standby system.

The fast task of the active system transmits the request frame or the idle frame to the fast task of the standby system, if the fast task of the active system does not receive the response frame of the fast task of the standby system within a specified time, the active system considers that the active system and the standby system are not synchronized.

If the fast task of the standby system does not receive the request frame or the idle frame transmitted by the fast task of the active system within a specified time, the standby system considers that the active system and the standby system are not synchronized.

Exemplarily, the request frame or the idle frame transmitted by the fast task of the active system to the fast task of the standby system both contain the operating state information of the active system and external input information.

If the length of the external input information is very short, raw data of the external input information can be directly transmitted, the standby system compares the raw data received by the active system and the standby system;

Exemplarily, both the standby system and the active system are receiving the same external input information, the active system transmits its received external input information to the standby system, the standby system will compare the external input information received respectively by the active system and the standby system, so as to determine which input data of the two systems have been synchronized, use the synchronized data , buffer the unsynchronized data, and continue to determine synchronization of the unsynchronized data.

If the length of the external input information is too long, directly transmitting the raw data of the external input information will inevitably consume a lot of time, which will affect correct execution and real-time performance of system functions; in this case, a characteristic value of the external input data can be calculated and transmitted, including but not limited to CRC (cyclic redundancy check) check value, the characteristic value is used to represent the external input data to improve real-time performance of data transmission between the active system and the standby system.

Exemplarily, the CRC check value is only used as one type of characteristic value for external input information that is transmitted and compared, it is not limited to the very type of characteristic value data of the CRC check value.

When the data length of the external input information is too long, it will take too long to directly transmit the raw data of the external input information, and at the time of information exchange, information transmission and feedback will take time in the transmission process, which will affect correct execution and real-time performance of system functions. Exemplarily, when the train needs to be disassembled or marshalled, the switch needs to be changed so that the running track can be switched. When the track needs to be changed, the ground interlocking device can output information to the electric switch machine, the electric switch machine changes the switch, then feeds back information to the ground interlocking device. If the information is too long and the information output and feedback fail, it will lead to the inability to control the train to change its lane, which will further affect the condition of train hump disintegration or hump tail marshalling, train hump disintegration and hump tail marshalling are only taken as examples to illustrate, it is not limited to only the train interlocking manner. And when the length of the external input information is too long, it is very likely to cause information errors while wasting time, which may cause the train to derail. Therefore, the data of external input information can be compressed and the characteristic value of external input information can be used, then only a small amount of characteristic value data will be used to replace the external input data, reducing errors caused by data transmission, and improving real-time and accuracy of data transmission between the active system and the standby system.

Exemplarily, under normal conditions of synchronized data, the length of synchronized data ranges from tens to one hundred. The synchronization data length range under normal conditions is only an example, it is not limited to this synchronization data length range. If the synchronization data length is less than or equal to that of the synchronization data in the normal condition, then the raw data can be directly transmitted and compared. If the length of the synchronized data is greater than that of the normal data, the data transmission will not only consume the channel, but also take up a lot of time, which will affect the real-time performance, therefor the characteristic value of the synchronized data can be transmitted to achieve a convenience effect.

Periodic running of the active system and the standby system: the active system and the standby system use the same kind of hardware platform and the same kind of application software, the hardware platform ensures that the active system and the standby system are synchronously powered on, and their periods are synchronized, that is, the period numbers of the active system and the standby system are accumulated upward from 1, and increments by 1 each period which works out the respective period numbers of the active system and the standby system, the hardware platform ensures that the period numbers of the active system and the standby system are the same, otherwise the active system and the standby system are considered out of synchronization .

The present disclosure also provides a system for synchronization and hot backup of active-standby system of a device, including a period module and a synchronization module. The period module: the fast task and the slow task of the active system and the standby system are both executed periodically, and the executing period of the fast task should be less than that of the slow task to avoid the situation of period conflict between the fast task and the slow task;

The synchronization module: the fast task and the slow task between the active system and the standby system are carried out periodically, and the data of the active system and the standby system are mutually hot backed up, the active system information and the standby system information are carried out in an interactive manner, and the active system outputs control commands, the standby system does not output control commands.

Exemplarily, the hardware platform ensures that the active system and the standby system are synchronously powered on, the software platform ensures that operating states and external inputs of the active system and the standby system are synchronized, which realizes hot backup of the active system and the standby system, and the standby system does not output control commands while the active system outputs control commands, so when the active system and the standby system are synchronized, if the active system has a failure, the standby system can be upgraded to an active system to achieve seamless and safe switching.

Although the present disclosure has been described in detail with reference to the foregoing embodiments, those of ordinary skill in the art should understand that they can still modify the technical solutions described in the foregoing embodiments, or equivalently replace some of the technical features.

## Claims

1. A method for synchronization and hot backup of active-standby system of a device, the method comprising steps of:
ensuring, by a hardware platform, that periods of the active system and the standby system are synchronized;
ensuring, by an application software, that operating states and external inputs of the active system and the standby system are synchronized;
ensuring, by the application software, that the active system outputs control commands, and the standby system does not output control commands;
upgrading the standby system to an active system if the active system has a failure in the case where the active system and the standby system are synchronized;
losing synchronization between the active system and the standby system when the standby system enters a failure state;
wherein the application software of the active system and the standby system at least includes one fast task of high priority and one slow task of low priority;
wherein the fast task of the active system and the fast task of the standby system are used to quickly transmit operating states and external input information, and to determine external input information received by both the active system and the standby system;
wherein the fast task of the active system transmits a request frame or an idle frame to the fast task of the standby system, both the request frame and the idle frame include operating states and external input information of the active system;
wherein the slow task of the active system and the slow task of the standby system are used to execute application software logic, and to use external input information received by both the active system and the standby system as determined by the fast tasks in each period to achieve synchronization of external inputs between the active system and the standby system; wherein the fast tasks and slow tasks both include a waiting-for-synchronization phase and a synchronized phase;
wherein each time when a period of the slow task starts, the active system and the standby system enter the waiting-for-synchronization phase, wherein the active system and the standby system respectively suspend their respective application software logic, and wait for the fast task to give a result of whether the active system and the standby system are synchronized and to give synchronized external input information;
in the waiting-for-synchronization phase, the fast task of the active system transmits a request frame to the fast task of the standby system, the fast task of the standby system receives the request frame, uses the operating states of the active system, and compares the external input information of the active system and that of the standby system; if the comparison is successful, the standby system enters a synchronized state, the fast task of the standby system replies with a response frame to the fast task of the active system to inform the active system of the synchronized external input information, the fast task of the active system receives the response frame from the fast task of the standby system, and the active system also enters the synchronized state;
in the synchronized phase, the slow task of the active system and the slow task of the standby system start to execute their respective application software logic, and use only the external input information received by both the active system and the standby system, so as to achieve synchronization of the external input information;
in the synchronized phase, the fast task of the active system still transmits an idle frame periodically, the fast task of the standby system receives the idle frame, uses the operating states of the active system, and stores external input information of the active system for synchronization check of external input information in a waiting-for-synchronization state of a next period of slow task.

2. The method for synchronization and hot backup of active-standby system of a device according to claim 1, wherein the active system and the standby system use the same kind of hardware platform and the same kind of application software, the hardware platform ensures that the active system and the standby system are synchronously powered on, and periods of the active system and the standby system are synchronized.

3. The method for synchronization and hot backup of active-standby system of a device according to claim 2, wherein the hardware platform ensures that period numbers of the active system and the standby system are the same to prevent the active system and the standby system from losing synchronization.

4. The method for synchronization and hot backup of active-standby system of a device according to claim 1, wherein when the external input information is short, the active system directly transmits raw data of the external input information to the standby system, the standby system compares raw data received by the active system and the standby system; when the external input information is too long, the active system transmits a characteristic value of the external input information to the standby system, and characteristic values of the external input information are compared.

5. A device of active-standby system, comprising means for carrying out the method for synchronization and hot backup according to any of claims 1 to 4,
wherein the device comprises a period module and a synchronization module, wherein
the period module is used to ensure that periods of the active system and the standby system are synchronized;
the synchronization module is used to ensure that operating states and external inputs of the active system and the standby system are synchronized, and the active system outputs control commands, the standby system does not output control commands.

## Patentansprüche

1. Verfahren für Synchronisation und Hot-Backup eines Aktiv-Standby-Systems einer Vorrichtung, wobei das Verfahren folgende Schritte umfasst:
Sicherstellen, durch eine Hardwareplattform, dass Perioden des aktiven Systems und des Standby-Systems synchronisiert sind;
Sicherstellen, durch eine Anwendungssoftware, dass Betriebszustände und externe Eingaben des aktiven Systems und des Standby-Systems synchronisiert sind;
Sicherstellen, durch die Anwendungssoftware, dass das aktive System Steuerbefehle ausgibt und das Standby-System keine Steuerbefehle ausgibt;
Hochrüsten des Standby-Systems auf ein aktives System, wenn das aktive System eine Störung aufweist, falls das aktive System und das Standby-System synchronisiert sind;
Verlieren einer Synchronisation zwischen dem aktiven System und dem Standby-System, wenn das Standby-System in einen Störungszustand eintritt;
wobei die Anwendungssoftware des aktiven Systems und des Standby-Systems mindestens eine schnelle Aufgabe mit hoher Priorität und eine langsame Aufgabe mit niedriger Priorität enthält;
wobei die schnelle Aufgabe des aktiven Systems und die schnelle Aufgabe des Standby-Systems verwendet werden, um Betriebszustände und externe Eingabeinformationen schnell zu übertragen und externe Eingabeinformationen zu bestimmen, die sowohl vom aktiven System als auch vom Standby-System empfangen werden;
wobei die schnelle Aufgabe des aktiven Systems einen Anforderungsrahmen oder einen Leerrahmen an die schnelle Aufgabe des Standby-Systems überträgt, sowohl der Anforderungsrahmen als auch der Leerrahmen Betriebszustände und externe Eingabeinformationen des aktiven Systems enthalten;
wobei die langsame Aufgabe des aktiven Systems und die langsame Aufgabe des Standby-Systems verwendet werden, um Anwendungssoftwarelogik auszuführen und externe Eingangsinformationen zu verwenden, die sowohl vom aktiven System als auch vom Standby-System empfangen werden, wie durch die schnellen Aufgaben in jeder Periode bestimmt, um eine Synchronisation externer Eingaben zwischen dem aktiven System und dem Standby-System zu erzielen, wobei sowohl die schnellen Aufgaben als auch die langsamen Aufgaben eine Warte-auf-Synchronisation-Phase und eine synchronisierte Phase enthalten;
wobei
jedes Mal, wenn eine Periode der langsamen Aufgabe beginnt, das aktive System und das Standby-System in eine Warte-auf-Synchronisation-Phase eintreten, in der das aktive System und das Standby-System jeweils ihre jeweilige Anwendungssoftwarelogik aussetzen und darauf warten, dass die schnelle Aufgabe ein Ergebnis dazu liefert, ob das aktive System und das Standby-System synchronisiert sind, und synchronisierte externe Eingabeinformationen liefert;
in der Warte-auf-Synchronisation-Phase die schnelle Aufgabe des aktiven Systems einen Anforderungsrahmen an die schnelle Aufgabe des Standby-Systems überträgt, die schnelle Aufgabe des Standby-Systems den Anforderungsrahmen empfängt, die Betriebszustände des aktiven Systems verwendet und die externen Eingabeinformationen des aktiven Systems und die des Standby-Systems vergleicht; wobei, wenn der Vergleich erfolgreich ist, das Standby-System in einen synchronisierten Zustand eintritt, die schnelle Aufgabe des Standby-Systems mit einem Antwortrahmen auf die schnelle Aufgabe des aktiven Systems antwortet, um das aktive System über die synchronisierten externen Eingabeinformationen zu informieren, die schnelle Aufgabe des aktiven Systems den Antwortrahmen von der schnellen Aufgabe des Standby-Systems empfängt und das aktive System ebenfalls in den synchronisierten Zustand eintritt;
in der synchronisierten Phase, die langsame Aufgabe des aktiven Systems und die langsame Aufgabe des Standby-Systems damit beginnen, ihre jeweilige Anwendungssoftwarelogik auszuführen, und nur die sowohl vom aktiven System als auch vom Standby-System empfangenen externen Eingabeinformationen verwenden, um eine Synchronisation der externen Eingabeinformationen zu erzielen;
in der synchronisierten Phase, die schnelle Aufgabe des aktiven Systems noch periodisch einen Leerrahmen überträgt, die schnelle Aufgabe des Standby-Systems den Leerrahmen empfängt, die Betriebszustände des aktiven Systems verwendet und externe Eingangsinformationen des aktiven Systems zur Synchronisationsprüfung externer Eingabeinformationen in einem Warte-auf-Synchronisation-Zustand einer nächsten Periode einer langsamen Aufgabe speichert.

2. Verfahren für Synchronisation und Hot-Backup eines Aktiv-Standby-Systems einer Vorrichtung nach Anspruch 1, wobei das aktive System und das Standby-System die gleiche Art von Hardwareplattform und die gleiche Art von Anwendungssoftware verwenden, wobei die Hardwareplattform sicherstellt, dass das aktive System und das Standby-System synchron eingeschaltet werden und Perioden des aktiven Systems und des Standby-Systems synchronisiert sind.

3. Verfahren für Synchronisation und Hot-Backup eines Aktiv-Standby-Systems einer Vorrichtung nach Anspruch 2, wobei die Hardwareplattform sicherstellt, dass Periodenzahlen des aktiven Systems und des Standby-Systems gleich sind, um zu verhindern, dass das aktive System und das Standby-System die Synchronisation verlieren.

4. Verfahren für Synchronisation und Hot-Backup eines Aktiv-Standby-Systems einer Vorrichtung nach Anspruch 1, wobei, wenn die externen Eingabeinformationen kurz sind, das aktive System Rohdaten der externen Eingabeinformationen direkt an das Standby-System überträgt, das Standby-System vom aktiven System und vom Standby-System empfangene Rohdaten vergleicht; wenn die externen Eingabeinformationen zu lang sind, das aktive System einen charakteristischen Wert der externen Eingabeinformationen an das Standby-System überträgt und charakteristische Werte der externen Eingabeinformationen verglichen werden.

5. Vorrichtung eines Aktiv-Standby-Systems, umfassend Mittel zum Ausführen des Verfahrens für Synchronisation und Hot-Backup nach einem der Ansprüche 1 bis 4,
wobei die Vorrichtung ein Periodenmodul und ein Synchronisationsmodul umfasst, wobei
das Periodenmodul verwendet wird, um sicherzustellen, dass Perioden des aktiven Systems und des Standby-Systems synchronisiert sind;
das Synchronisationsmodul dazu verwendet wird, um sicherzustellen, dass Betriebszustände und externe Eingaben des aktiven Systems und des Standby-Systems synchronisiert sind und das aktive System Steuerbefehle ausgibt, das Standby-System keine Steuerbefehle ausgibt.

## Revendications

1. Procédé de synchronisation et de sauvegarde à chaud d'un système actif-de secours d'un dispositif, le procédé comprenant les étapes de :
assurance, par une plateforme matérielle, que les périodes du système actif et du système de secours sont synchronisées ;
assurance, par un logiciel d'application, que les états de fonctionnement et les entrées externes du système actif et du système de secours sont synchronisés ;
assurance, par le logiciel d'application, que le système actif délivre des commandes de contrôle, et que le système de secours ne délivre pas de commandes de contrôle ;
mise à niveau du système de secours vers un système actif si le système actif présente une défaillance dans le cas où le système actif et le système de secours sont synchronisés ;
perte de synchronisation entre le système actif et le système de secours lorsque le système de secours entre dans un état de défaillance ;
dans lequel le logiciel d'application du système actif et du système de secours comprend au moins une tâche rapide de priorité élevée et une tâche lente de priorité faible ;
dans lequel la tâche rapide du système actif et la tâche rapide du système de secours sont utilisées pour transmettre rapidement des états de fonctionnement et des informations d'entrée externes, et pour déterminer des informations d'entrée externes reçues à la fois par le système actif et le système de secours ;
dans lequel la tâche rapide du système actif transmet une trame de requête ou une trame inactive à la tâche rapide du système de secours, à la fois la trame de requête et la trame inactive comprennent des états de fonctionnement et des informations d'entrée externes du système actif ;
dans lequel la tâche lente du système actif et la tâche lente du système de secours sont utilisées pour exécuter la logique du logiciel d'application, et pour utiliser les informations d'entrée externes reçues à la fois par le système actif et le système de secours telles que déterminées par les tâches rapides dans chaque période pour réaliser la synchronisation des entrées externes entre le système actif et le système de secours ;
dans lequel les tâches rapides et les tâches lentes comprennent toutes deux une phase d'attente de synchronisation et une phase synchronisée ;
dans lequel chaque fois qu'une période de la tâche lente démarre, le système actif et le système de secours entrent dans la phase d'attente de synchronisation, dans lequel le système actif et le système de secours suspendent respectivement leur logique logicielle d'application respective, et attendent que la tâche rapide donne un résultat indiquant si le système actif et le système de secours sont synchronisés, et donne des informations d'entrée externes synchronisées ;
dans la phase d'attente de synchronisation, la tâche rapide du système actif transmet une trame de requête à la tâche rapide du système de secours, la tâche rapide du système de secours reçoit la trame de requête, utilise les états de fonctionnement du système actif, et compare les informations d'entrée externes du système actif et celles du système de secours ; si la comparaison est réussie, le système de secours entre dans un état synchronisé, la tâche rapide du système de secours répond par une trame de réponse à la tâche rapide du système actif pour informer le système actif des informations d'entrée externes synchronisées, la tâche rapide du système actif reçoit la trame de réponse de la tâche rapide du système de secours, et le système actif entre également dans l'état synchronisé ;
dans la phase synchronisée, la tâche lente du système actif et la tâche lente du système de secours commencent à exécuter leur logique logicielle d'application respective, et n'utilisent que les informations d'entrée externes reçues à la fois par le système actif et le système de secours, de manière à réaliser la synchronisation des informations d'entrée externes ;
dans la phase synchronisée, la tâche rapide du système actif transmet encore périodiquement une trame inactive, la tâche rapide du système de secours reçoit la trame inactive, utilise les états de fonctionnement du système actif et stocke les informations d'entrée externes du système actif pour le contrôle de synchronisation d'informations d'entrée externes dans un état d'attente de synchronisation d'une prochaine période de tâche lente.

2. Procédé de synchronisation et de sauvegarde à chaud d'un système actif-de secours d'un dispositif selon la revendication 1, dans lequel le système actif et le système de secours utilisent le même type de plateforme matérielle et le même type de logiciel d'application, la plateforme matérielle assure que le système actif et le système de secours sont mis sous tension de manière synchrone, et les périodes du système actif et du système de secours sont synchronisées.

3. Procédé de synchronisation et de sauvegarde à chaud d'un système actif-de secours d'un dispositif selon la revendication 2, dans lequel la plateforme matérielle garantit que les numéros de période du système actif et du système de secours sont les mêmes pour empêcher le système actif et le système de secours de perdre la synchronisation.

4. Procédé de synchronisation et de sauvegarde à chaud d'un système actif-de secours d'un dispositif selon la revendication 1, dans lequel lorsque les informations d'entrée externes sont courtes, le système actif transmet directement les données brutes des informations d'entrée externes au système de secours, le système de secours compare les données brutes reçues par le système actif et le système de secours ; lorsque les informations d'entrée externes sont trop longues, le système actif transmet une valeur caractéristique des informations d'entrée externes au système de secours, et les valeurs caractéristiques des informations d'entrée externes sont comparées.

5. Dispositif de système actif-de secours, comprenant des moyens pour mettre en oeuvre le procédé de synchronisation et de sauvegarde à chaud selon l'une quelconque des revendications 1 à 4,
dans lequel le dispositif comprend un module de période et un module de synchronisation, dans lequel
le module de période est utilisé pour s'assurer que les périodes du système actif et du système de secours sont synchronisées ;
le module de synchronisation est utilisé pour assurer que les états de fonctionnement et les entrées externes du système actif et du système de secours sont synchronisés, et que le système actif émet des commandes de contrôle, que le système de secours n'émet pas de commandes de contrôle.
